# EUROPÄISCHE PATENTSCHRIFT

(11) **EP 2 976 250 B1**
(45) Veröffentlichungstag und Bekanntmachung des Hinweises auf die Patenterteilung: **04.04.2018**
(21) Anmeldenummer: 14704811.0
(22) Anmeldetag: 18.02.2014
(51) Int. Cl.: B62D 21/15, B62D 25/02, B62D 25/20

(54) **SCHWELLER FÜR EINE FAHRZEUGKAROSSERIE**
ROCKER PANEL FOR A VEHICLE BODY
SEUIL DE PORTE POUR UNE CARROSSERIE DE VÉHICULE

(30) Priorität: 21.03.2013 DE 102013004852
(43) Veröffentlichungstag der Anmeldung: 27.01.2016
(73) Patentinhaber: ThyssenKrupp Steel Europe AG, 47166 Duisburg (DE)
(72) Erfinder: CAPITAINE, Hervé, 40468 Düsseldorf (DE); SÜNKEL, Ralf, 40883 Ratingen (DE)
(74) Vertreter: thyssenkrupp Intellectual Property GmbH
(86) Internationale Anmeldenummer: PCT/EP2014/053054
(87) Internationale Veröffentlichungsnummer: WO 2014/146841

(56) Entgegenhaltungen:
- EP-A1- 1 024 074
- DE-A1- 10 248 846
- DE-A1-102005 038 463
- DE-A1-102009 044 417
- DE-A1-102010 037 462
- DE-B4- 10 028 716
- DE-T2-602006 000 101

## Beschreibung

Die Erfindung betrifft einen Schweller für eine Fahrzeugkarosserie, mit einem länglichen, als Hohlprofil ausgebildeten Verstärkungsbauteil aus Metall, vorzugsweise Stahl, und/oder Kunststoff, vorzugsweise faserverstärktem Kunststoff.

Der Schweller eines Kraftfahrzeuges ist ein wichtiges Trag- und Stützelement der selbstragenden Fahrzeugkarosserie. Er befindet sich unterhalb des Türeinstieges, längs auf beiden Seiten des Fahrzeuges, zwischen den Radkästen. Der Schweller ist in der Regel aus einer Seitenwand (Seitenteil), einem Verstärkungsbauteil, einem Verstärkungsstegblech und einem Innenteil, welches den Hohlraum des Schwellers verschließt, aufgebaut. An das Innenteil ist das Bodenblech angefügt.

Eine wesentliche Funktion des Schwellers ist die Aufnahme von Lasten, insbesondere bei einem Frontalzusammenstoß. Beim Seitenaufprall (Seitencrash) soll der Schweller die Aufprallenergie abbauen und die Eindringgeschwindigkeit reduzieren. Insbesondere soll der Schweller bei einer seitlichen Fahrzeugkollision eine stabile Barriere gegen eine Intrusion in die Fahrgastzelle darstellen.

Bekannte Schwellerverstärkungselemente bestehen im Wesentlichen aus längsseitigen Profilstreben oder Blechformteilen, welche im Bereich von Türschwellen des Fahrzeugs angeordnet sind. Solche Verstärkungselemente erhöhen die Steifigkeit der Fahrzeugkarosserie und nehmen bei einem Seitencrash durch Deformation Aufprallenergien auf.

Ein allgemeines Ziel bei der Konstruktion von Schwellerverstärkungselementen ist es, eine möglichst hohe Biege- und Torsionssteifigkeit sowie ein möglichst großes Absorptionsvermögen von Aufprallenergie bei einem möglichst geringen Gewicht der Schwellerverstärkungselemente zu erreichen.

Es wurden bereits verschiedene Ansätze zur Verbesserung von Schwellerverstärkungselementen vorgeschlagen. Viele bekannte Schwellerverstärkungselemente sind dabei aus mehreren Teilen aufgebaut. So beschreibt beispielsweise die DE 100 28 716 B4 eine Schwellerkonstruktion mit einer äußeren und einer inneren Schwellerverstärkung, die innerhalb eines geschlossenen Schwellerquerschnitts angeordnet sind. Die innere Schwellerverstärkung ist stegförmig ausgebildet und mit Befestigungsflanschen des äußeren Seitenblechs und des inneren Seitenblechs des Schwellers verschweißt. Die äußere Schwellerverstärkung besitzt ein hutförmiges Querschnittsprofil und ist an der inneren Schwellerverstärkung so angeschweißt, dass sie mit der letzterer einen inneren geschlossenen Kammerquerschnitt definiert. In diesem geschlossenen Kammerquerschnitt ist in bestimmten Abständen in Längsrichtung der Karosserie eine Vielzahl von Verstrebungen angeordnet, die als Stützelemente dienen. Was die Minimierung der Intrusion in die Fahrgastzelle bei einem Seitencrash anbelangt, ist eine solche Schwellerkonstruktion allerdings noch verbesserungsfähig.
Ein weiterer Vorschlag zur Verbesserung der Verstärkung von Schwellern ist in der DE 102 48 846 A1 beschrieben. Dort ist ein Schwellerverstärkungselement beschrieben, welches aus einem einteiligen eines Aluminium-Strangpressprofil in Form eines wenigstens zwei Kammern aufweisenden Hohlprofils besteht, dessen Breite ein Mehrfaches seiner Höhe beträgt. Nachteilig bei dieser Konstruktion ist, dass das Schwellerprofilteil hauptsächlich zur Aufnahme von Seitenaufprallkräften ausgebildet ist, aufgrund seines Breiten-Höhenverhältnisses jedoch nur einen relativ geringen Beitrag zur Gesamtkarosseriesteifigkeit leistet. Denn letzteres würde eine hohe Biegesteifigkeit auch in einer Ebene senkrecht zur Breite des Schwellerverstärkungselements erfordern. Ein weiteres ähnliches Bauteil ist aus der DE102009044417 bekannt. Davon ausgehend lag der vorliegenden Erfindung die Aufgabe zugrunde, einen Schweller der eingangs genannten Art dahingehend weiterzuentwickeln, dass er bei günstigen Bauteilkosten gegenüber herkömmlichen Schwellern einen höheren Widerstand gegen Intrusion in das Fahrzeug bei einem Seitenaufprall bietet und somit eine Gewichtsreduktion der Fahrzeugkarosserie ermöglicht.

Zur Lösung dieser Aufgabe wird ein Schweller mit den Merkmalen des Anspruchs 1 vorgeschlagen.

Bevorzugte und vorteilhafte Ausgestaltungen des erfindungsgemäßen Schwellers sind in den Unteransprüchen angegeben.

Der erfindungsgemäße Schweller ist mit einem länglichen, als Hohlprofil ausgebildeten Verstärkungsbauteil aus Metall, vorzugsweise aus Stahl, und/oder Kunststoff, vorzugsweise aus faserverstärktem Kunststoff versehen, das aus einer Gruppe von mindestens zwei, vorzugsweise mindestens drei zueinander verlaufenden Einzelprofilen aufgebaut ist.

Dadurch, dass das Verstärkungsbauteil des erfindungsgemäßen Schwellers aus mindestens zwei, vorzugsweise mindestens drei zueinander verlaufenden Einzelprofilen zusammengesetzt ist, lässt sich das Verstärkungsteil optimal hinsichtlich der an einen Karosserie-Schweller gestellten Anforderungen anpassen. Die Anpassung kann dabei sowohl hinsichtlich eines möglichst großen Absorptionsvermögens von Seitenaufprallkräften als auch hinsichtlich einer möglichst hohen Biege- und Torsionssteifigkeit vorgenommen werden.

Die Einzelprofile des Verstärkungsbauteils verlaufen vorzugsweise parallel oder im Wesentlichen parallel zueinander. Sie verlaufen derart zueinander, dass sie übereinander, in der Vertikalen, und/oder nebeneinander, in der Horizontalen, angeordnet sind.

Eine vorteilhafte Ausgestaltung des erfindungsgemäßen Verstärkungsbauteils besteht darin, dass sich die Einzelprofile hinsichtlich ihrer Wandstärke und/oder Zugfestigkeit voneinander unterscheiden.

Der erfindungsgemäße Schweller ermöglicht bei günstigen Bauteil- sowie Herstellungskosten insbesondere die Einstellung eines höheren Widerstandes gegen Intrusion in das Fahrzeug bei einem Seitenaufprall. Durch diese verbesserte Aufprall-Barrierewirkung ist eine Reduktion der Blechdicke in anderen Karosseriebereichen und damit eine Fahrzeuggewichtsreduzierung möglich.

Die Einzelprofile, aus denen das Verstärkungsbauteil des erfindungsgemäßen Schwellers aufgebaut ist, sind vorzugsweise jeweils aus Stahl gefertigt. Stahl zeichnet sich insbesondere durch eine gute Kaltumformbarkeit und eine bewährte und kostengünstige Schweißeignung aus. Zudem bietet der Werkstoff Stahl die Möglichkeit, höhere Festigkeiten gegenüber zum Beispiel Aluminium zu realisieren. Denkbar ist auch die Verwendung von Einzelprofilen aus warmvergütbarem Stahl, wie beispielsweise Mangan-Bor-Stahl. Die Einzelprofile des Schwellerverstärkungsbauteils können dabei durchgehend gehärtet sein oder Bereiche mit unterschiedlichen Festigkeiten aufweisen.

Alternativ oder in Kombination mit den metallischen Einzelprofilen können Kunststoffe, vorzugsweise faserverstärkte Kunststoffe verwendet werden. Insbesondere bei faserverstärkte Kunststoffen, vorzugsweise kohlenstofffaserverstärkten Kunstoffen, kann der Biege- bzw. Deformationswiderstand durch eine gezielte Ausrichtung der Fasern erhöht werden. Zudem sind faserverstärkte Bauteile in der Regel leichter als entsprechende Bauteile aus Metall, insbesondere Stahl.

Eine bevorzugte Ausführung des erfindungsgemäßen Schwellers sieht vor, dass mindestens zwei der Einzelprofile im Querschnitt betrachtet die gleichen äußeren Profilabmessungen aufweisen. Insbesondere können auch alle Einzelprofile des Verstärkungsbauteils im Querschnitt betrachtet die gleichen äußeren Profilabmessungen aufweisen. Durch eine solche Ausführung lassen sich Kostenvorteile bei der Herstellung und Montage des Verstärkungsbauteils erzielen. Die Ausführung des erfindungsgemäßen Schwellers ist dadurch gekennzeichnet, dass die Einzelprofile des Verstärkungsbauteils zu einem im Wesentlichen rechteckigen Hohlprofil aneinandergefügt sind. Insbesondere können die Einzelprofile dabei zu einem im Wesentlichen quadratischen Hohlprofil aneinandergefügt sein. Auch durch eine solche Ausführung lassen sich Kostenvorteile bei der Herstellung und Montage des Verstärkungsbauteils erzielen.
Hinsichtlich einer möglichst hohen Biege- und Torsionssteifigkeit ist es vorteilhaft, wenn gemäß einer weiteren Ausgestaltung des erfindungsgemäßen Schwellers mindestens eines der Einzelprofile des Verstärkungsbauteils aus Stahl mit einer Zugfestigkeit von mindestens 1200 MPa, vorzugsweise von mindestens 1400 MPa hergestellt ist.
Je nach Anforderung und mit Blick auf ein relativ geringes Gewicht können bei den Einzelprofilen des Verstärkungsbauteils unterschiedliche Werkstoffgüten und/oder Wandstärken verwendet werden. Insbesondere durch die Verwendung von Stählen mit Zugfestigkeiten von mindestens 780 MPa kann zumindest eines der Einzelprofile mit geringerer Wandstärke hergestellt werden, beispielsweise mit einer mindestens 10% geringeren Wandstärke als diejenige des Einzelprofils mit der größten Wandstärke. Kommen Stähle mit Zugfestigkeiten von mindestens 1200 MPa zum Einsatz, kann die Wandstärke des betreffenden Einzelprofils weiter reduziert werden, beispielsweise auf eine Wandstärke, die mindestens 20%, vorzugsweise mindestens 30% geringer ist als diejenige des Einzelprofils mit der größten Wandstärke.
Eine weitere bevorzugte Ausgestaltung des erfindungsgemäßen Schwellers sieht vor, dass mindestens zwei der Einzelprofile des Schwellerverstärkungsbauteils lokal miteinander verbunden sind. Hierdurch kann der Deformationswiderstand des Verstärkungsbauteils weiter erhöht werden. Die lokale Verbindung der Einzelprofile kann dabei vorzugsweise aus einem oder mehreren Schweißpunkten gebildet sein. Zur Optimierung des Deformationswiderstandes des Schwellers können auch alle Einzelprofile seines Verstärkungsbauteils lokal miteinander verbunden sein.

Eine weitere Ausgestaltung des erfindungsgemäßen Schwellers sieht vor, dass mindestens zwei der Einzelprofile entlang ihrer Längsachsen durchgehend miteinander verbunden sind. Auch hierdurch kann der Deformationswiderstand des Verstärkungsbauteils weiter erhöht werden. Die durchgehende Verbindung der Einzelprofile kann dabei aus einer Schweißnaht oder einer Klebeschicht gebildet sein. Zur Optimierung des Deformationswiderstandes des Schwellers können auch alle Einzelprofile des Verstärkungsbauteils entlang ihrer Längsachsen durchgehend miteinander verbunden sein.

Zur Erzielung eines hohen Deformationswiderstandes des erfindungsgemäßen Schwellers weisen die Einzelprofile des Verstärkungsbauteils vorzugsweise jeweils ein geschlossenes Querschnittsprofil auf.

Alternativ kann die Gruppe der Einzelprofile aber auch mindestens ein Einzelprofil mit geschlossenem Querschnittsprofil und mindestens ein Einzelprofil mit offenem Querschnittsprofil, vorzugsweise C-Profil, aufweisen. Die Verwendung eines oder mehrerer Einzelprofile mit offenem Querschnittsprofil vereinfacht eine Schweißverbindung der Einzelprofile, da in diesem Fall ein geeignetes Schweißwerkzeug, beispielsweise eine Schweißzange, durch die Öffnung des Einzelprofils in dasselbe eingeführt werden kann.

Eine weitere vorteilhafte Ausgestaltung des erfindungsgemäßen Schwellers ist dadurch gekennzeichnet, dass sich mindestens zwei der Einzelprofile bezüglich ihrer Querschnittsform voneinander unterscheiden. Hierdurch lässt sich wiederum der Deformationswiderstand des Verstärkungsbauteils und damit des Schwellers erhöhen und/oder dessen Gewicht verringern.

Eine weitere vorteilhafte Ausgestaltung des erfindungsgemäßen Schwellers ist dadurch gekennzeichnet, dass das Schwellerverstärkungsbauteil in Längsrichtung geschwungen oder gebogen ausgebildet ist, dergestalt, dass es an seinen Enden entweder mit einem äußeren Karosserieseitenblech des Schwellers oder einem inneren Seitenschwellerblech verbunden ist, während es mittig oder an seinem mittleren Längenabschnitt mit dem jeweils gegenüberliegenden Blech, d.h. dem inneren Seitenschwellerblech oder äußeren Karosserieseitenblech verbunden ist.

Nachfolgend wird die Erfindung anhand einer mehrere Ausführungsbeispiele darstellenden Zeichnung näher erläutert. Es zeigen schematisch:
- Fig. 1: eine Vertikalschnittdarstellung eines erfindungsgemäßen Schwellers mit einem integrierten Verstärkungsbauteil;
- Fig. 2: eine Vertikalschnittdarstellung eines erfindungsgemäßen Schwellers mit einem integrierten Verstärkungsbauteil in einer zweiten Ausführung;
- Fig. 3: eine Vertikalschnittdarstellung eines erfindungsgemäßen Schwellers mit einem integrierten Verstärkungsbauteil in einer dritten Ausführung;
- Fig. 4: eine Vertikalschnittdarstellung eines erfindungsgemäßen Schwellers mit einem integrierten Verstärkungsbauteil in einer zweiten Ausführung;
- Fig. 5: eine Vertikalschnittdarstellung eines erfindungsgemäßen Schwellers mit einem integrierten Verstärkungsbauteil in einer dritten Ausführung;
- Fig. 6 bis 13: verschiedene Ausführungsbeispiele eines erfindungsgemäßen Verstärkungsbauteils für einen Schweller einer Fahrzeugkarosserie.

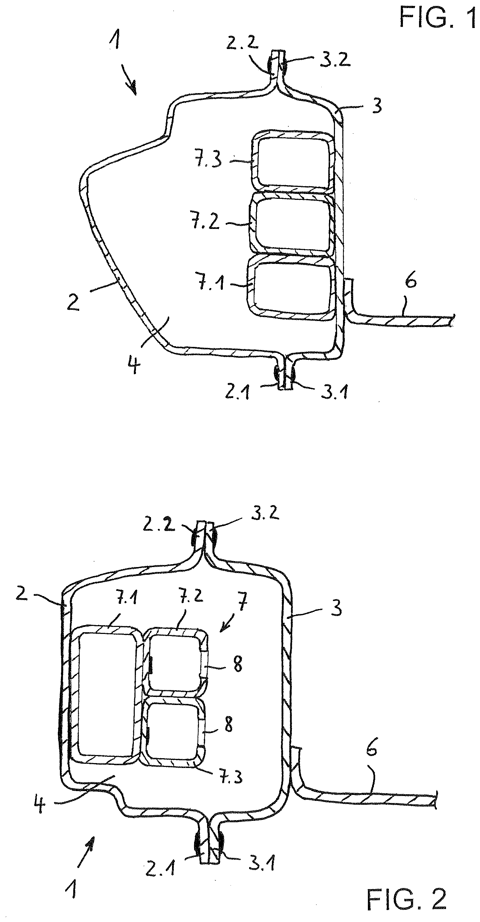

Der in Fig. 1 im Querschnitt dargestellte Schweller 1 einer Fahrzeugkarosserie, insbesondere Personenkraftwagenkarosserie, ist aus einem äußeren Karosserieseitenteilblech 2 und einem inneren Seitenschwellerblech 3 gebildet. Die beiden Bleche 2, 3 definieren einen geschlossenen Querschnitt bzw. länglichen Hohlraum 4. Sie weisen einander zugeordnete Befestigungsflansche 2.1, 2.2, 3.1, 3.2 auf. Die Verbindung der Befestigungsflansche 2.1, 2.2, 3.1, 3.2 ist beispielsweise als Schweiß- oder Nietverbindung ausgeführt. An der Innenseite des Schwellers 1 bzw. dem Seitenschwellerblech 3 ist ein Bodenblech 6 befestigt.

An dem inneren Seitenschwellerblech 3 ist ein erfindungsgemäßes Schwellerverstärkungsbauteil 7 befestigt. Das Schwellerverstärkungsbauteil 7 ist aus mehreren, mindestens zwei, vorzugsweise mindestens drei zueinander verlaufenden Einzelprofilen 7.1, 7.2, 7.3 aufgebaut. Die Einzelprofile 7.1, 7.2, 7.3 sind dabei in Reihe übereinander angeordnet.

Hier nicht dargestellt, kann das aus mindestens zwei, vorzugsweise mindestens drei Einzelprofilen aufgebaute Schwellerverstärkungsbauteil 7 in Längsrichtung geschwungen oder gebogen ausgebildet sein, dergestalt, dass es an seinen Enden entweder mit dem Karosserieseitenblech 2 oder mit dem inneren Seitenschwellerblech 3 verbunden ist, während es mittig oder an seinem mittleren Längenabschnitt mit dem jeweils gegenüberliegenden Blech, d.h. dem Seitenschwellerblech 3 oder Karosserieseitenblech 2 verbunden ist. Dadurch kann der Deformationswiderstand erhöht werden.

Die Einzelprofile 7.1, 7.2, 7.3 sind vorzugsweise aus Stahl, vorzugsweise mit einer Zugfestigkeit von mindestens 1200 MPa, beispielsweise aus warmvergütbarem Stahl gefertigt und weisen vorzugsweise jeweils ein im Wesentlichen rechteckiges Querschnittsprofil auf. Die Einzelprofile 7.1, 7.2, 7.3 unterscheiden sich voneinander hinsichtlich ihrer Wandstärke und/oder Zugfestigkeit. Beispielsweise besitzt das obere Einzelprofil 7.3 eine deutlich größere oder geringere Zugfestigkeit als die anderen Einzelprofile 7.1, 7.2. Dies kann sich positiv auf das Knickverhalten in der Vertikalen auswirken, abhängig davon, in welchem Fahrzeugtyp (z.B. Kleinwagen oder SUV) die erfindungsgemäße Schwellerverstärkung eingesetzt wird.

Die Einzelprofile 7.1, 7.2, 7.3 sind mit dem inneren Seitenschwellerblech 3 verschweißt, verklebt, vernietet und/oder verschraubt. Darüber hinaus sind die Einzelprofile 7.1, 7.2, 7.3 vorzugsweise auch selbst miteinander verschweißt, verklebt vernietet und/oder verschraubt. Die Schweißverbindung kann dabei aus mehreren lokalen Schweißpunkten oder einer durchgehenden Schweißnaht bestehen.

Das in Fig. 2 dargestellte Ausführungsbeispiel unterscheidet sich von demjenigen in Fig. 1 dadurch, dass das Schwellerverstärkungsbauteil 7 aus Einzelprofilen 7.1, 7.2, 7.3 unterschiedlicher Profilform und unterschiedlicher Profilhöhe zusammengesetzt ist. Die Einzelprofile 7.1, 7.2, 7.3 sind dabei zu einem im Wesentlichen rechteckigen, beispielsweise im Wesentlichen quadratischen Hohlprofil aneinandergefügt. Das Schwellerverstärkungsbauteil 7 ist hier somit aus vertikal übereinander Einzelprofilen 7.2, 7.3 und horizontal nebeneinander angeordneten Einzelprofilen 7.1 und 7.2, 7.3 zusammengesetzt. Die Einzelprofile 7.1 7.2, 7.3 sind miteinander beispielsweise verschweißt oder vernietet. Zur Anbringung von Schweißpunkten oder Nieten können in den Einzelprofilen Öffnungen 8 zur Einführung eines Schweiß- oder Nietwerkzeuges (nicht gezeigt) ausgebildet sein.

Zudem unterscheidet sich das in Fig. 2 gezeigte Ausführungsbeispiel von dem in Fig. 1 dadurch, dass das Schwellerverstärkungsbauteil 7 an dem Karosserieseitenblech 2 befestigt ist. Die Verbindung des Verstärkungsbauteils 7 mit dem Karosserieseitenblech 2 kann ebenfalls als Schweiß- oder Nietverbindung, aber alternativ auch als Klebe- oder Schraubverbindung ausgeführt sein.

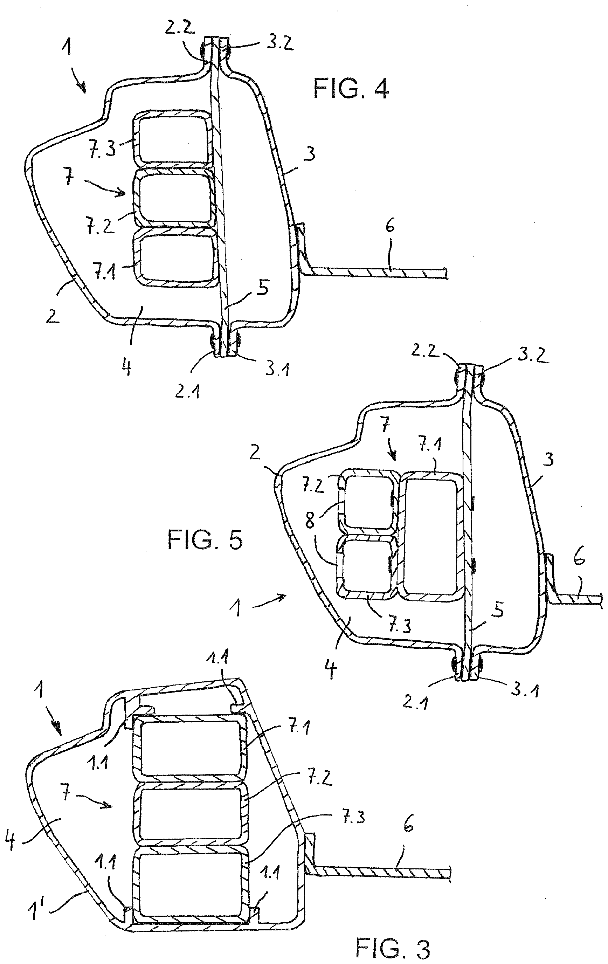

Das in Fig. 3 dargestellte Ausführungsbeispiel unterscheidet sich von den in den Figuren 1 und 2 gezeigten Beispielen dadurch, dass der Schweller 1 aus einem Strangpressprofil 1', beispielsweise einem Leichtmetall- Strangpressprofil, insbesondere Aluminium-Strangpressprofil besteht. Das Strangpressprofil 1' weist an seiner Innenseite vorstehende Stege oder Vorsprünge 1.1 auf, die der Festlegung des Verstärkungsbauteils 7 dienen. Das Verstärkungsbauteil 7 ist wiederum aus mehreren Einzelprofilen, beispielsweise mindestens drei Einzelprofilen 7.1, 7.2, 7.3 aus Stahl und/oder faserverstärktem Kunststoff, vorzugsweise aus kohlenstofffaserverstärktem Kunststoff zusammengesetzt, wobei sich die Einzelprofile 7.1, 7.2, 7.3 hinsichtlich ihrer Wandstärke und/oder Zugfestigkeit voneinander unterscheiden.

Die in den Figuren 4 und 5 dargestellten Ausführungsbeispiele unterscheiden sich von den in den Figuren 1 und 2 gezeigten Beispielen dadurch, dass der Schweller 1 eine stegförmige Schwellerverstärkung 5 aufweist. Die Schwellerverstärkung 5 ist innerhalb des länglichen Hohlraums 4 des Schwellers angeordnet. Sie ist zwischen den Befestigungsflanschen 2.1, 2.2, 3.1, 3.2 des Karosserieseitenteilblechs 2 und des inneren Seitenschwellerblechs 3 angeordnet und mit den Flanschen 2.1, 2.2, 3.1, 3.2 fest verbunden. Die stegförmige Schwellerverstärkung 5 ist im Wesentlichen vertikal ausgerichtet und erstreckt sich parallel zur Fahrzeuglängsachse. Die stegförmige Schwellerverstärkung 5 verleiht dem Schweller 1 eine hohe Biegesteifigkeit in vertikaler Ebene. An der Innenseite des Schwellers 1 bzw. dem Seitenschwellerblech 3 ist wiederum ein Bodenblech 6 befestigt.

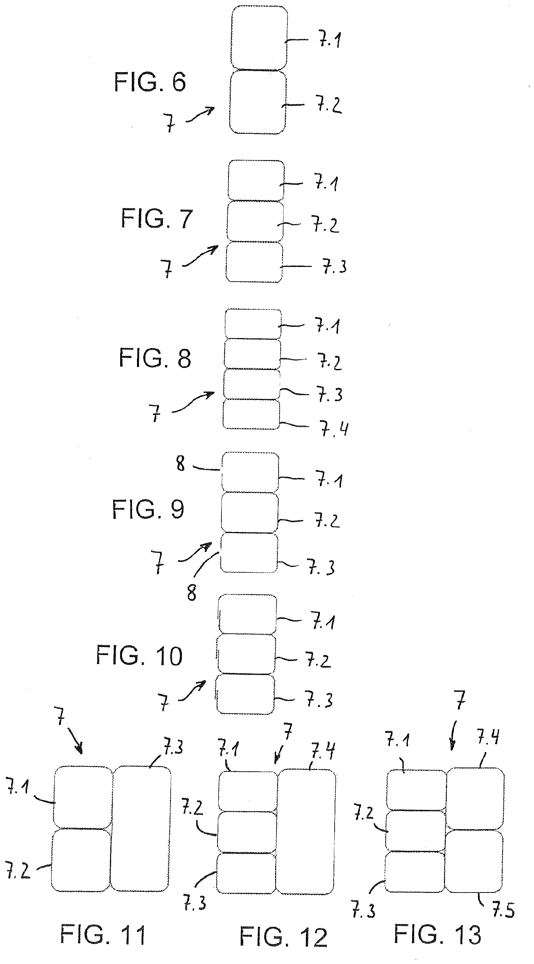

An der stegförmigen Schwellerverstärkung 5 ist ein erfindungsgemäßes Schwellerverstärkungsbauteil 7 befestigt. In den Figuren 6 bis 13 sind verschiedene Ausführungsbeispiele des erfindungsgemäßen Schwellerverstärkungsbauteils 7 skizziert. Das Verstärkungsbauteil 7 ist jeweils aus einer Gruppe von mindestens zwei, vorzugsweise mindestens drei parallel zueinander verlaufenden Einzelprofilen 7.1, 7.2, 7.3, 7.4 und/oder 7.5 aufgebaut.

Die in den Figuren 6 bis 10 gezeigten Ausführungsbeispiele weisen jeweils in einer einzelnen Reihe übereinander bzw. nebeneinander angeordnete Einzelprofile 7.1, 7.2; 7.1, 7.2, 7.3 bzw. 7.1, 7.2, 7.3, 7.4 auf. Die Einzelprofile 7.1, 7.2, 7.3 und/oder 7.4 bestehen dabei aus Einzelprofilen mit geschlossenem Querschnittsprofil (vgl. Fig. 6 bis 8) und/oder Einzelprofilen mit offenem Querschnittsprofil (vgl. Fig. 9).

Insbesondere kann das Verstärkungsbauteil 7 mindestens ein Einzelprofil mit geschlossenem Querschnittsprofil und mindestens ein Einzelprofil mit offenem Querschnittsprofil, vorzugsweise C-Profil, aufweisen (vgl. Fig. 9). Bei den geschlossenen Einzelprofilen des erfindungsgemäßen Verstärkungsbauteils 7 kann es sich um nahtlose Hohlprofile oder um längsnahtgeschweißte Hohlprofile handeln, wobei die längsnahtgeschweißten Hohlprofile einen Stumpfstoß oder Überlappstoß (Fig. 10) aufweisen. Ferner können die geschlossenen Einzelprofile des erfindungsgemäßen Verstärkungsbauteils 7 auch aus rollgeformten Hohlprofilen ohne Längsschweißnaht bestehen (vgl. Fig. 10).

Die ein im Wesentlichen rechteckiges Querschnittsprofil aufweisenden Einzelprofile 7.1, 7.2, 7.3 und/oder 7.4 liegen dicht aneinander und sind beispielsweise durch Schweiß-, Klebe-, Niet- oder Schraubverbindung miteinander verbunden.

Die Figuren 11 bis 13 zeigen verschiedene Kombinationsbeispiele der Einzelprofile 7.1, 7.2, 7.3, 7.4 und/oder 7.5. Das erfindungsgemäße Verstärkungsbauteil 7 ist dabei aus drei, vier oder fünf Einzelprofilen zusammengesetzt, wobei sich mindestens zwei Einzelprofile des jeweiligen Verstärkungsbauteils 7 hinsichtlich ihrer Querschnittsform bzw. Breiten-Höhenverhältnisses voneinander unterscheiden.

Die Ausführung der Erfindung ist nicht auf die in der Zeichnung dargestellten Ausführungsbeispiele beschränkt. Vielmehr sind eine Vielzahl von Varianten denkbar, die auch bei von den dargestellten Ausführungsbeispielen abweichender Gestaltung von der in den beiliegenden Ansprüchen angegebenen Erfindung Gebrauch machen.

## Patentansprüche

1. Schweller (1) für eine Fahrzeugkarosserie, mit einem länglichen, als Hohlprofil ausgebildeten Verstärkungsbauteil (7) aus Metall, vorzugsweise aus Stahl, und/oder aus Kunststoff, vorzugsweise aus faserverstärktem Kunststoff, wobei das Verstärkungsbauteil (7) aus einer Gruppe von mindestens zwei, vorzugsweise mindestens drei Einzelprofilen (7.1, 7.2, 7.3, 7.4, 7.5) aufgebaut ist, **dadurch gekennzeichnet, dass** die Einzelprofile (7.1, 7.2, 7.3, 7.4, 7.5) jeweils ein geschlossenes Querschnittsprofil aufweisen und zu einem im Wesentlichen rechteckigen Hohlprofil aneinandergefügt sind.

2. Schweller nach Anspruch 1, **dadurch gekennzeichnet, dass** mindestens zwei der Einzelprofile (7.1, 7.2, 7.3, 7.4, 7.5) im Querschnitt betrachtet die gleichen äußeren Profilabmessungen aufweisen.

3. Schweller nach Anspruch 1, **dadurch gekennzeichnet, dass** alle Einzelprofile (7.1, 7.2, 7.3, 7.4, 7.5) des Verstärkungsbauteils (7) im Querschnitt betrachtet die gleichen äußeren Profilabmessungen aufweisen.

4. Schweller nach einem der Ansprüche 1 bis 3, **dadurch gekennzeichnet, dass** die Einzelprofile (7.1, 7.2, 7.3, 7.4, 7.5) zu einem im Wesentlichen quadratischen Hohlprofil aneinandergefügt sind.

5. Schweller nach einem der Ansprüche 1 bis 4, **dadurch gekennzeichnet, dass** mindestens eines der Einzelprofile (7.1, 7.2, 7.3, 7.4, 7.5) aus Stahl mit einer Zugfestigkeit von mindestens 1200 MPa hergestellt ist.

6. Schweller nach einem der Ansprüche 1 bis 5, **dadurch gekennzeichnet, dass** mindestens zwei der Einzelprofile (7.1, 7.2, 7.3, 7.4, 7.5) lokal miteinander verbunden sind.

7. Schweller nach einem der Ansprüche 1 bis 6, **dadurch gekennzeichnet, dass** mindestens zwei der Einzelprofile (7.1, 7.2, 7.3, 7.4, 7.5) entlang ihrer Längsachsen durchgehend miteinander verbunden sind.

8. Schweller nach einem der Ansprüche 1 bis 7, **dadurch gekennzeichnet, dass** die Gruppe der Einzelprofile (7.1, 7.2, 7.3, 7.4, 7.5) mindestens ein Einzelprofil (7.2) mit geschlossenem Querschnittsprofil und mindestens ein Einzelprofil (7.1, 7.2) mit offenem Querschnittsprofil, vorzugsweise C-Profil, aufweist.

9. Schweller nach einem der Ansprüche 1 bis 8, **dadurch gekennzeichnet, dass** sich mindestens zwei der Einzelprofile (7.1, 7.2, 7.3, 7.4, 7.5) bezüglich ihrer Querschnittsform, Wandstärke und/oder Zugfestigkeit voneinander unterscheiden.

## Claims

1. Sill (1) for a vehicle body, having an elongate reinforcement component (7) from metal, preferably from steel, and/or from plastics, preferably from fiber-reinforced plastics, which is configured as a hollow profile, wherein the reinforcement component (7) is constructed from a group of at least two, preferably at least three individual profiles (7.1, 7.2, 7.3, 7.4, 7.5), **characterized in that** the individual profiles (7.1, 7.2, 7.3, 7.4, 7.5) in each case have a closed cross-sectional profile and are joined together so as to form a substantially rectangular hollow profile.

2. Sill according to Claim 1, **characterized in that** when viewed in the cross section at least two of the individual profiles (7.1, 7.2, 7.3, 7.4, 7.5) have the same external profile dimensions.

3. Sill according to Claim 1, **characterized in that** when viewed in the cross section all individual profiles (7.1, 7.2, 7.3, 7.4, 7.5) of the reinforcement component (7) have the same external profile dimensions.

4. Sill according to one of Claims 1 to 3, **characterized in that** the individual profiles (7.1, 7.2, 7.3, 7.4, 7.5) are joined together so as to form a substantially square hollow profile.

5. Sill according to one of Claims 1 to 4, **characterized in that** at least one of the individual profiles (7.1, 7.2, 7.3, 7.4, 7.5) is manufactured from steel having a tensile strength of at least 1200 MPa.

6. Sill according to one of Claims 1 to 5, **characterized in that** at least two of the individual profiles (7.1, 7.2, 7.3, 7.4, 7.5) are interconnected in a localized manner.

7. Sill according to one of Claims 1 to 6, **characterized in that** at least two of the individual profiles (7.1, 7.2, 7.3, 7.4, 7.5) along their longitudinal axes are continuously interconnected.

8. Sill according to one of Claims 1 to 7, **characterized in that** the group of individual profiles (7.1, 7.2, 7.3, 7.4, 7.5) has at least one individual profile (7.2) having a closed cross-sectional profile, and at least one individual profile (7.1, 7.2) having an open cross-sectional profile, preferably a C-profile.

9. Sill according to one of Claims 1 to 8, **characterized in that** at least two of the individual profiles (7.1, 7.2, 7.3, 7.4, 7.5) differ from one another in terms of their cross-sectional shape, wall thickness and/or tensile strength.

## Revendications

1. Seuil de porte (1) pour une carrosserie de véhicule, avec une pièce de renforcement allongée (7), constituée par un profilé creux, en métal, de préférence en acier, et/ou en matière plastique, de préférence en matière plastique renforcée par des fibres, dans lequel la pièce de renforcement (7) est composée d'un groupe d'au moins deux, de préférence d'au moins trois profilés individuels (7.1, 7.2, 7.3, 7.4, 7.5), **caractérisé en ce que** les profilés individuels (7.1, 7.2, 7.3, 7.4, 7.5) présentent chaque fois un profil de section transversale fermé et sont assemblés les uns aux autres en formant un profilé creux essentiellement rectangulaire.

2. Seuil de porte selon la revendication 1, **caractérisé en ce qu'**au moins deux des profilés individuels (7.1, 7.2, 7.3, 7.4, 7.5) considérés en section transversale présentent les mêmes dimensions extérieures de profilé.

3. Seuil de porte selon la revendication 1, **caractérisé en ce que** tous les profilés individuels (7.1, 7.2, 7.3, 7.4, 7.5) de la pièce de renforcement (7) considérés en section transversale présentent les mêmes dimensions extérieures de profilé.

4. Seuil de porte selon l'une quelconque des revendications 1 à 3, **caractérisé en ce que** les profilés individuels (7.1, 7.2, 7.3, 7.4, 7.5) sont assemblés les uns aux autres en formant un profilé creux essentiellement carré.

5. Seuil de porte selon l'une quelconque des revendications 1 à 4, **caractérisé en ce qu'**au moins un des profilés individuels (7.1, 7.2, 7.3, 7.4, 7.5) est fabriqué en acier avec une résistance à la traction d'au moins 1200 MPa.

6. Seuil de porte selon l'une quelconque des revendications 1 à 5, **caractérisé en ce qu'**au moins deux des profilés individuels (7.1, 7.2, 7.3, 7.4, 7.5) sont reliés localement l'un à l'autre.

7. Seuil de porte selon l'une quelconque des revendications 1 à 6, **caractérisé en ce qu'**au moins deux des profilés individuels (7.1, 7.2, 7.3, 7.4, 7.5) sont reliés l'un à l'autre de façon continue le long de leurs axes longitudinaux.

8. Seuil de porte selon l'une quelconque des revendications 1 à 7, **caractérisé en ce que** le groupe des profilés individuels (7.1, 7.2, 7.3, 7.4, 7.5) présente au moins un profilé individuel (7.2) avec un profil de section transversale fermé et au moins un profilé individuel (7.1, 7.2) avec un profil de section transversale ouvert, de préférence un profil en C.

9. Seuil de porte selon l'une quelconque des revendications 1 à 8, **caractérisé en ce qu'**au moins deux des profilés individuels (7.1, 7.2, 7.3, 7.4, 7.5) se différencient l'un de l'autre en ce qui concerne leur forme de section transversale, leur épaisseur de paroi et/ou leur résistance à la traction.
